Europäisches Patentamt

European Patent Office

Office européen des brevets

(11) Veröffentlichungsnummer: **0 411 198 A1**

# (12) EUROPÄISCHE PATENTANMELDUNG

(21) Anmeldenummer: 89114461.0

(22) Anmeldetag: 04.08.89

(51) Int. Cl.⁵: **H01Q 17/00**, G01K 11/16

(43) Veröffentlichungstag der Anmeldung:
06.02.91 Patentblatt 91/06

(84) Benannte Vertragsstaaten:
AT BE CH FR GB IT LI SE

(71) Anmelder: G + H MONTAGE GMBH
Bürgermeister Grünzweig-Strasse 1
D-6700 Ludwigshafen am Rhein(DE)

(72) Erfinder: Schubert, Rolf
Ringstr. 25m
D-6941 Abtsteinach 2(DE)
Erfinder: Körner, Christian
Steingrundstr. 41m
D-6940 Weinheim-Rippenweiher(DE)

(74) Vertreter: Patentanwälte Grünecker,
Kinkeldey, Stockmair & Partnerner
Maximilianstrasse 58
D-8000 München 22(DE)

(54) Absorber für elektromagnetische und akustische Wellen.

(57) Die Erfindung betrifft einen Absorber für elektromagnetische und akustische Wellen mit einem Mineralwolle und Partikel aus einem leitfähigen Material enthaltenden Absorberkörper.

Bekannte derartige Absorber haben den Nachteil, daß es durch Freisetzung von Partikeln zur Verschmutzung von Meßräumen und zu Störungen in elektrischen Geräten sowie zur langfristigen Verringerung der Absorptionswirkung für elektromagnetische Wellen kommen kann.

Es ist die Aufgabe der Erfindung, einen Absorber mit langfristig stabiler Absorptionswirkung zu schaffen, durch den die Sauberkeit in Meßräumen gewährleistet ist. Erfindungsgemäß wird diese Aufgabe gelöst, indem die Mineralwolle mit einem Bindemittel versetzt wird, dem die Partikel beigemengt sind.

FIG.1

# ABSORBER FÜR ELEKTROMAGNETISCHE UND AKUSTISCHE WELLEN

Die Erfindung betrifft einen Absorber, insbesondere einen Breitbandabsorber, für elektromagnetische und akustische Wellen mit einem Mineralwolle und Partikel aus einem leitfähigen Material enthaltenden Absorberkörper.

Derartige Absorber kommen vor allem in reflexionsarmen Meßräumen zum Einsatz. Durch Auskleidung der Wände mit den Absorbern läßt sich eine hohe Reflexionsdämpfung erzielen, so daß annähernd Freifeldbedingungen herrschen.

Bekannte Absorber, die aus einem überwiegend organischen Material bestehen, haben den schwerwiegenden Nachteil, daß sie brennbar sind. Für Meßräume, die mit solchen Absorbern ausgestattet sind, müssen daher aufwendige zusätzliche Brandschutzeinrichtungen vorgesehen werden. Auch ist die Alterungsbeständigkeit derartiger Absorber begrenzt.

Es sind auch Absorber für elektromagnetische und akustische Wellen bekannt, die aus unbrennbarer Mineralwolle bestehen, der, um über die schallschluckende Wirkung der Mineralwolle hinaus eine Absorptionswirkung für elektromagnetische Wellen zu erzielen, Kohle- bzw. Graphitpulver oder Eisenpulver (feine Späne) zugesetzt sind.

Das Pulver läßt sich in der Mineralwolle nur schwer homogen verteilen, und die einbettbare Pulvermenge ist begrenzt. Der schwerwiegendste Nachteil dieser bekannten Absorber besteht jedoch darin, daß das Kohlepulver leicht aus der Mineralwolle freigesetzt wird und es dadurch zu starken Verschmutzungen der Meßräume und sogar zu Störungen in elektrischen Geräten durch Ablagerungen kommen kann. Außerdem läßt die Absorptionsfähigkeit für elektromagnetische Wellen durch den Verlust an Kohle- bzw. Eisenpulver mit der Zeit nach.

Es ist die Aufgabe der Erfindung, einen Absorber für elektromagnetische und akustische Wellen zu schaffen, durch den in Meßräumen die erforderliche Sauberkeit gewährleistet ist und der seine Absorptionsfähigkeit dauerhaft beibehält.

Erfindungsgemäß wird diese Aufgabe dadurch gelöst, daß der Mineralwolle ein Bindemittel zugesetzt ist, dem Partikel mit einer Absorberwirkung für elektromagnetische Wellen beigemischt sind.

Durch diese Maßnahme werden die die Absorption elektromagnetischer Wellen bewirkenden Partikel fest an die Mineralwolle gebunden, und es kann weder zu einer Verschmutzung der Räume noch zu einem Nachlassen der Absorptionsfähigkeit der Absorberkörper kommen.

Als Bindemittel lassen sich vorteilhaft organische Duro-Plastharze oder Thermoplaste, aber auch anorganische Bindemittel auf der Basis von Wasserglas oder Ton verwenden.

Partikel, durch die eine Absorption elektromagnetischer Wellen erzielt wird, können in Form von Graphit-, Ruß-Metall- oder Ferritpulver beigemischt werden, wobei auch ein Gemisch aus diesen Stoffen vorgesehen werden kann.

Eine weitere vorteilhafte Ausgestaltung der Erfindung besteht darin, die Absorberkörper jeweils mit einem elastischen Gewebe oder Gewirke zu umhüllen, das dem im wesentlichen aus einem Fasermaterial bestehenden Absorberkörper Formstabilität verleiht.

Darüber hinaus kann es vorteilhaft sein, den Absorberkörper mit einem Resonanzabsorber zu verbinden, der für die Absorption im Meterwellenbereich ausgelegt ist. Durch diesen Resonanzabsorber läßt sich eine insgesamt verringerte Einbautiefe erzielen.

Weitere Ausgestaltungsmöglichkeiten der Erfindung gehen aus den Unteransprüchen hervor.

Die Erfindung soll nun anhand eines Ausführungsbeispiels und der beiliegenden Zeichnung weiter erläutert und beschrieben werden.

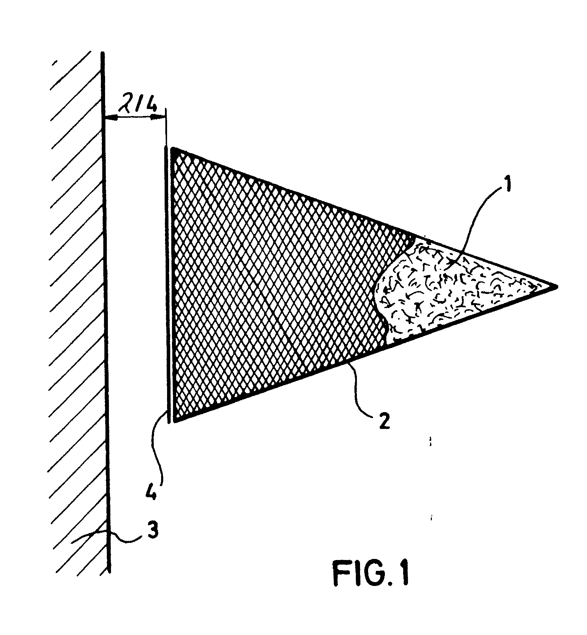

Die Figur 1 zeigt ein Ausführungsbeispiel für einen erfindungsgemäßen Absorber mit kegelförmigem Absorberkörper und einem Folienresonanzabsorber.

Der in Figur 1 gezeigte Absorber weist einen Absorberkörper aus Mineralwolle (Glas- oder Steinwolle) auf, die mit einem Bindemittel versetzt ist, dem Partikel beigemischt sind, durch die eine Absorptionswirkung für elektromagnetische Wellen erzielt wird, während die Absorption von Schallwellen im wesentlichen durch den Absorberkörper erfolgt. Durch die erfindungsgemäße Verwendung eines Bindemittels und Beimengung dieser Partikel zu diesem Bindemittel wird eine feste Bindung der Partikel an den Absorberkörper und damit eine gleichbleibende Absorptionswirkung für elektromagnetische Wellen erzielt.

Weitere Vorteile dieser Maßnahme bestehen darin, daß sich die dem Bindemittel beigemischten Partikel homogen innerhalb des Absorberkörpers verteilen lassen und daß hohe Partikelkonzentrationen und damit hohe Absorptionswirkungen erzielbar sind.

Als Bindemittel können vorteilhaft verschiedene organische oder/und anorganische Stoffe verwendet werden. Bindemittel können Melaminharze, Formaldehydharze, Naturharze oder Thermoplaste oder Gemische aus den genannten Stoffen sein. Darüber hinaus sind auch Kunststoffdispersionen verwendbar oder anorganische Binder auf der Basis von Wasserglas oder Ton.

Dem Bindemittel kann Ferrit-, Ruß-, Metall- oder Ferritpulver oder ein Gemisch aus diesen Stoffen beigemengt sein. Beimengungen von Kohlenstoffpartikeln erhöhen im wesentlichen die komplexe Dielektrizitätskonstante, während Materialien wie Ferrite eine Erhöhung der komplexen Permeabilität bewirken.

Der im vorliegenden Beispiel als Keil ausgeführte Absorberkörper, der auch pyramiden- oder kegelförmig ausgebildet sein könnte, ist mit einem elastischen Gewebe oder Gewirke 2 überzogen, das sich durch seine Elastizität selbsttätig gegen die Oberfläche des Absorberkörpers anlegt. Das elastische Gewebe oder Gewirke ist von solcher Dicke und Maschenweite, daß es die Absorptionswirkung des Absorberkeils nicht beeinträchtigt.

Bei dem in Figur 1 dargestellten Ausführungsbeispiel ist auf die der Spitze des Keils abgewandten Fläche eine Folie 4 aus einem Material mit einem elektrischen Flächenwiderstand von 377 Ohm/cm² aufgebracht. Diese Folie wirkt als Resonanzabsorber für Wellen der Länge λ, wenn der Abstand der der Spitze des Keils abgewandten Fläche des Absorberkörpers zu einer reflektierenden Wand 3 einen Betrag von λ/4 aufweist. Der Abstand zur reflektierenden Wand ist so bemessen, daß eine Resonanzabsoption im Meterwellenbereich des elektromagnetischen Spektrums erfolgt. Als Resonanzabsorber wären auch in dem Kegel eingebettete Schleifenantennen oder Dipole verwendbar.

**Ansprüche**

1. Absorber für elektromagnetische und akustische Wellen, mit einem Mineralwolle und Partikel aus einem leitfähigen Material enthaltenden Absorberkörper (1),
dadurch **gekennzeichnet**,
daß die Mineralwolle mit einem Bindemittel versetzt ist, dem die Partikel beigemengt sind.
2. Absorber nach Anspruch 1,
dadurch **gekennzeichnet**,
daß das Bindemittel aus einem organischen oder/und anorganischen Stoff besteht.
3. Absorber nach Anspruch 2,
dadurch **gekennzeichnet**,
daß das Bindemittel aus einem Duro-Plastharz oder/und Thermoplast besteht.
4. Absorber nach Anspruch 3,
dadurch **gekennzeichnet**,
daß das Bindemittel aus Melamin, Formaldehyd oder einem Gemisch aus wenigstens zwei von den genannten Stoffen besteht.
5. Absorber nach einem der Ansprüche 2 bis 4,
dadurch **gekennzeichnet**,
daß als Bindemittel eine Kunststoffdispersion verwendet ist.

6. Absorber nach Anspruch 2,
dadurch **gekennzeichnet**,
daß ein Bindemittel auf der Basis von Wasserglas oder Ton verwendet ist.
7. Absorber nach einem der Ansprüche 1 bis 6,
dadurch **gekennzeichnet**,
daß die Partikel aus Graphit, Ruß, Metall und/oder Ferritpartikeln oder als Mischungen aus wenigstens zwei dieser Materialien bestehen.
8. Absorber nach einem der Ansprüche 1 bis 7,
dadurch **gekennzeichnet**,
daß die Absorberkörper (1) keil-, kegel- oder pyramidenförmig ausgebildet sind.
9. Absorber nach einem der Ansprüche 1 bis 8,
dadurch **gekennzeichnet**,
daß die Absorberkörper (1) mit einem elastischen Gewebe oder Gewirke (2) umhüllt sind.
10. Absorber nach einem der Ansprüche 1 bis 9,
dadurch **gekennzeichnet**,
daß der Absorberkörper (1) mit einem Resonanzabsorber (4) verbunden ist.
11. Absorber nach Anspruch 10,
dadurch **gekennzeichnet**,
daß auf einer der Flächen des Absorberkörpers (1) eine Widerstandsfolie zur Bildung eines Resonanzabsorbers (4) angeordnet ist.
12. Absorber nach Anspruch 10,
dadurch **gekennzeichnet**,
daß der Resonanzabsorber (4) als in den Absorberkörper (1) eingebettete Schleifenantenne oder eingebetteter Dipol ausgebildet ist.
13. Absorber nach einem der Ansprüche 10 bis 12,
dadurch **gekennzeichnet**,
daß der Resonanzabsorber für die Absorption im Meterwellenbereich ausgelegt ist.

FIG.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 170 639 (ROCKWOOL AKTIEBOLAGET) * Seite 2, Zeilen 6-31; Seite 6, Zeilen 2-15; Ansprüche 1,7,8; Figuren 1,5 * | 1-3 | H 01 Q 17/00 G 01 K 11/16 |
| Y | | 7,10,11,13 | |
| Y | EP-A-0 121 655 (DORNIER) * Zusammenfassung; Seite 4, Zeilen 14-18; Seite 5, Zeile 20 - Seite 6, Zeile 18 * | 7,10,11,13 | |
| A | DE-A-3 009 182 (SOCIETE EUROPEENNE DE PROPULSION) * Seite 7, letzter Absatz - Seite 10, Absatz 2; Ansprüche 1-17 * | 1-7,9 | |
| A | US-A-3 568 196 (BAYRD et al.) * Ansprüche 1-6; figure 1 * | 1,5,8,13 | |
| A | US-A-2 977 591 (TANNER) * Spalte 3, Zeile 26 - Spalte 4, Zeile 7; figur 2 * | 1,5,8,13 | RECHERCHIERTE SACHGEBIETE (Int. Cl.5) |
| A | DE-A-1 907 752 (GRÜNZWEIG & HARTMANN) | 1,9 | H 01 Q B 07 B |
| A | DE-A-3 709 658 (LICENTIA) * Ansprüche 1-24 * | 1,10,12 | C 03 B C 04 B G 10 K |
| A | US-A-3 895 143 (TARLOW) * Zusammenfassung; Figur * | 1 | |

Der vorliegende Recherchenbericht wurde für alle Patentansprüche erstellt

| Recherchenort | Abschlußdatum der Recherche | Prüfer |
|---|---|---|
| DEN HAAG | 14-02-1990 | ANGRABEIT F.F.K. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
    Dokument

EPO FORM 1503 03.82 (P0403)